# EUROPEAN PATENT SPECIFICATION

(11) **EP 3 068 582 B1**
(45) Date of publication and mention of the grant of the patent: **17.01.2018**
(21) Application number: 14815033.7
(22) Date of filing: 14.11.2014
(51) Int. Cl.: B25B 5/00, B25B 5/04, B25B 5/14, F16C 1/06

(54) **ELECTROMECHANICALLY-OPERATED CLAMPING FIXTURE, PARTICULARLY FOR CLAMPING SHEET-METAL VEHICLE PARTS**
ELEKTROMECHANISCH BETÄTIGBARE SPANNVORRICHTUNG, INSBESONDERE ZUM AUFSPANNEN VON FAHRZEUGTEILEN AUS BLECH
FIXATION PAR SERRAGE ÉLECTROMÉCANIQUE, EN PARTICULIER POUR LE SERRAGE DE PIÈCES DE VÉHICULE EN TÔLE MÉTALLIQUE

(30) Priority: 15.11.2013 IT TO20130929
(43) Date of publication of application: 21.09.2016
(73) Proprietor: Tecnica Montaggio & Automazione S.r.L., 10139 Torino (IT)
(72) Inventor: MILANESIO, Renato, 10024 Moncalieri (Torino) (IT); MAFFEO, Valter, 10135 Torino (IT); PETRINI, Paolo, 10137 Torino (IT); BERTOTTI, Lorenzo, 10137 Torino (IT); PETRINI, Davide, 10137 Torino (IT)
(74) Representative: Rondano, Davide
(86) International application number: PCT/IB2014/066050
(87) International publication number: WO 2015/071871

(56) References cited:
- EP-A1- 0 216 710
- EP-A2- 1 149 665
- WO-A1-87/02923
- DE-A1- 10 315 576
- FR-A- 729 540
- JP-A- S62 246 443
- US-A- 5 067 606

## Description

The present invention relates to a clamping fixture, particularly for clamping sheet-metal vehicle parts, comprising a plurality of clamping devices and an electromechanical actuation system for actuating such clamping devices.

A clamping fixture typically includes a plurality of clamping devices that are opened and closed in a timely manner according to well-defined sequences so as to clamp and release mechanical parts (such as sheet-metal vehicle parts) or other types of parts.

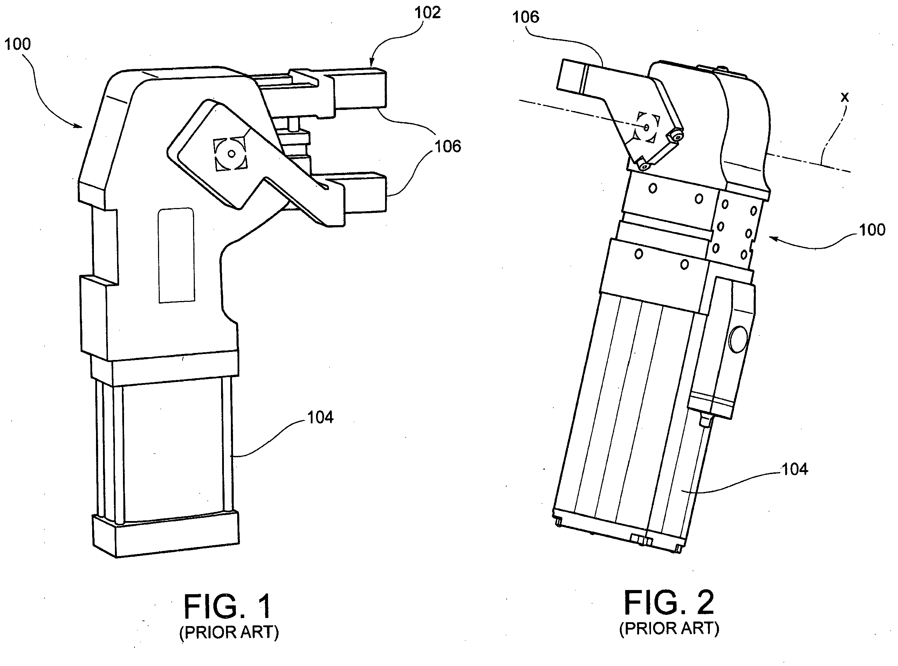

In the clamping fixtures currently available on the market, the clamping devices are typically pneumatically-operated. An example of a pneumatically-operated clamping device is shown in Figure 1 of the attached drawings, where it is generally indicated 100. With reference to Figure 1, the clamping device 100 essentially includes a clamp member 102 and a pneumatic cylinder 104. The clamp member 102 includes a pair of arms 106 that can be moved towards and away from one another to assume respectively a closed position, in which they clamp from either side a portion of the part to be clamped, and an open position, in which they allow removal of that part. The relative closing/opening movement of the arms 106 is controlled by the pneumatic cylinder 104. Each pneumatic cylinder 104 is alternately connectable to a compressed-air feed line, to move the clamp member 102 to the closed position and hold it there, or to a discharge outlet (atmosphere), to bring back the clamp member 102 to the open position and to hold it there, the alternate connection to the feed line or to the discharge outlet being controlled by a solenoid valve (not shown). In the case of a clamping fixture used to clamp sheet-metal vehicle parts, such as side doors or rear doors, the various clamping devices are controlled in groups in sequence, in that a first group of clamping devices is closed first so as to clamp together two parts to be joined together (for example by welding), then a second group of clamping devices is closed so as to clamp a third part to be joined to the other two parts, and so on for all subsequent parts to be assembled. In this case, each group of clamping devices, and therefore of pneumatic actuators, is controlled by a respective solenoid valve.

The main drawback related to the use of pneumatically-operated clamping devices (although the same naturally also applies to hydraulically-operated clamping devices) is the consumption of electrical energy required to power the compressors that maintain the pressure in the lines that carry the compressed air to the pneumatic cylinders of the various clamping devices, said consumption being proportionately greater as the number of clamping devices increases and as the network of lines carrying the compressed air to the pneumatic cylinders of the various clamping devices increases in size. Furthermore, each loss in the compressed-air lines (typically at the joints) involves a larger consumption of electrical energy.

With a view to reducing the energy consumption of clamping fixtures it has been proposed to replace the pneumatic cylinders with electromechanical actuators, since the electromechanical actuators only draw energy when they are being operated, and therefore only when the clamp members of the clamping devices are moved from the closed position to the open position and vice versa, while they draw no or nearly no energy during all phases in which the clamping devices are not being operated.

EP 216 710 A discloses an electromechanically-operated clamping fixture of the prior art.

Another example of an electromechanically-operated clamping device according to the prior art (see for example EP 1 149 665 A2) is shown in Figure 2 of the attached drawings, in which parts and elements that are identical or correspond to those in Figure 1 have been indicated with the same reference signs. With reference to Figure 2, the clamping device 100 essentially includes an arm 106 that is supported so as to be tiltable about an axis of oscillation x and that acts as clamping member, and an electromechanical actuator 104 designed to control the tilting movement of the arm 106 about the axis of oscillation x between a closed position, in which it presses against the part to be clamped, and an open position, in which it enables said part to be removed. The electromechanical actuator 104 in turn includes an electric motor adapted to rotate an output member (not shown) about an axis of rotation (not shown) perpendicular to the axis of oscillation x and a motion-conversion mechanism (not shown) adapted to convert the rotary movement of the output member into a translational movement, in a direction parallel to the axis of rotation, of a control rod (not shown) operatively connected to the arm 106 so as to control the tilting movement thereof about the respective axis of oscillation x.

However, this known solution also has a number of drawbacks.

Firstly, in order to have substantially the same overall sizes as those of a pneumatically-operated clamping device of the type described above with reference to Figure 1, the electric motor has to be very small. This results in the electric motor being not very reliable. The entire clamping fixture is therefore also not very reliable, which is unacceptable in case of clamping fixtures used in the automobile industry, where the production rates are very high and therefore frequent failures of the clamping fixtures could result in huge financial losses.

Secondly, since each clamping device has its own electric motor, controlling the closing and opening phases of the various clamping devices in a single clamping fixture is complicated and costly.

It is therefore an object of the present invention to provide an electromechanically-operated clamping fixture for clamping mechanical parts, such as sheet-metal vehicle parts, that is not affected by the drawbacks of the prior art as discussed above.

This and other objects are fully achieved according to the present invention by virtue of an electromechanically-operated clamping fixture having the features defined in the enclosed independent claim 1.

Further advantageous features of the invention are set out in the dependent claims, the content of which is intended to form an integral and integrating part of the following description.

In short, the invention is based on the idea of providing an electromechanically-operated clamping fixture comprising a plurality of clamping devices and an electromechanical actuation system arranged to control the clamping devices, wherein each clamping device comprises a clamping member which is movable between a first position, or closed position, and a second position, or open position, and a translating control member which is operatively connected to the clamping member to cause the latter to move between said first and second positions, and wherein the electromechanical actuation system comprises an electric motor, a rotary actuation member adapted to be driven to rotate by the electric motor, and, for each clamping device, a rotary input member, a motion conversion mechanism for converting the rotary motion of the input member into a translational motion of the control member of that clamping device, and an elongated and flexible mechanical transmission member adapted to transmit torque from the rotary actuation member to the rotary input member of that clamping device, the elongated and flexible mechanical transmission member having a first end torsionally coupled, directly or indirectly, to the rotary input member of the respective clamping device, and a second end torsionally coupled, directly or indirectly, to the rotary actuation member.

As will become more evident from the following description, having a single electric motor that is connected to each of the clamping members via a respective elongated and flexible mechanical transmission member, and therefore that is positioned away from the clamping devices, eliminates the size problems that are present where electromechanical actuators such as the ones described above with reference to Figure 2 are used, i.e. actuators with the electric motor carried "on board". The size and power of the electric motor can thus be selected to suit the intended use of the same, without any size restrictions. This makes it possible not only to reduce the sizes of the clamping devices, which will no longer carry the electric motor on board, but also to increase the reliability of the actuation system, since - as mentioned above - an electric motor of appropriate size can be selected, with no restrictions regarding the size of the same. Moreover, since it is possible to control several clamping devices by means of a single electric motor, the complexity and the cost of the clamping fixture are reduced.

Preferably, the motion conversion mechanism of each clamping device is made as a screw and nut mechanism, wherein the screw is adapted to control the translational movement of the output member and the nut is adapted to be rotated by the input member of the clamping device.

Preferably, the clamping member of each clamping device is mounted so as to be able to tilt about an axis of oscillation.

Preferably, each elongated and flexible mechanical transmission member includes a flexible cable, formed by one or more steel strands, and a sheath in which the flexible cable is received so as to be free to rotate.

Preferably, the actuation system comprises, for each clamping device, a motion transmission mechanism for transmitting the motion from the rotary actuation member to the second end of the elongated and flexible mechanical transmission member associated to this clamping device.

According to an embodiment, the second end of each elongated and flexible mechanical transmission member is arranged with its longitudinal axis (which is also its axis of rotation) parallel to the axis of rotation of the rotary actuation member. Alternatively, the second end of each elongated and flexible mechanical transmission member is arranged with its longitudinal axis perpendicular to the axis of rotation of the rotary actuation member.

Further characteristics and advantages of the invention will become more apparent from the following detailed description, provided purely by way of non-limiting example, with reference to the attached drawings, in which:
Figure 1 is a perspective view of a pneumatically-operated clamping device according to the prior art;
Figure 2 is a perspective view of an electromechanically-operated clamping device according to the prior art;
Figure 3 is a perspective view of an electromechanically-operated clamping fixture for clamping sheet-metal vehicle parts according to the present invention;
Figure 4 is a section view of one of the clamping devices of the clamping fixture of Figure 3;
Figure 5 is a section view of another embodiment of a clamping device for a clamping fixture according to the invention;
Figure 6 is a section view of an example of an elongated and flexible mechanical transmission member that can be used in the actuation system according to the present invention;
Figure 7 is a partial section view showing the electric motor and the related connection to the motor-side ends of the elongated and flexible mechanical transmission members of the electromechanical actuation system of the clamping fixture according to the present invention; and
Figure 8 is a view similar to the view of Figure 7, but relating to a further embodiment of the electromechanical actuation system of the clamping fixture according to the present invention.

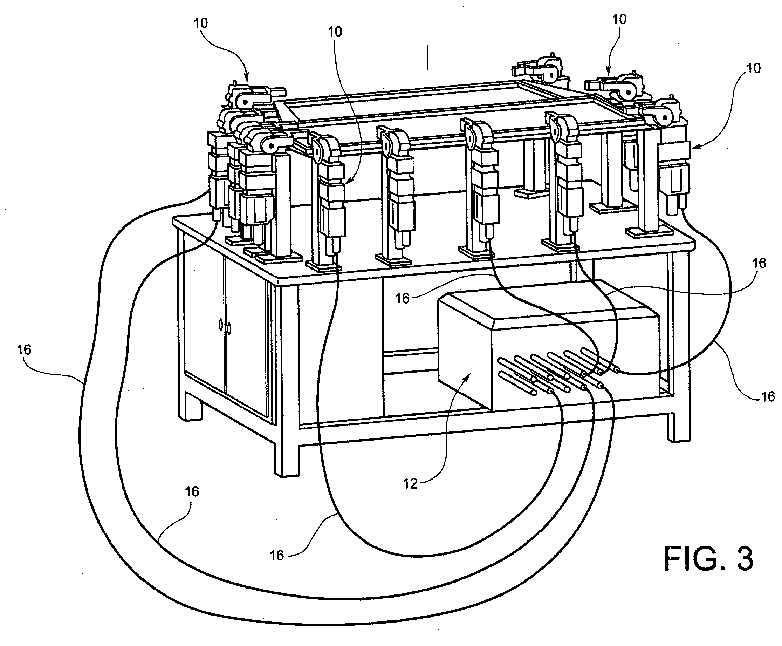

With reference first to Figure 3, this figure shows a clamping fixture for sheet-metal vehicle parts that includes a plurality of clamping devices, each indicted 10, and an electromechanical actuation system for actuating the clamping devices to cause them to close and open according to predetermined operating modes.

One operating mode can for example involve closing the clamping devices 10 in three successive phases, i.e. simultaneously closing first a first group of clamping devices, then simultaneously closing a second group of clamping devices and finally simultaneously closing a third group of clamping devices. As can be clearly seen from the following description, the clamping fixture according to the invention allows, however, to carry out a number of other operating modes, including the simultaneous closing/opening of all of the clamping devices.

The electromechanical actuation system basically includes a power unit 12, which in turn includes an electric motor 14 (not shown in Figure 3) and, for each clamping device 10, an elongated and flexible mechanical transmission member 16 adapted to transmit to the respective clamping device 10 the torque generated by the electric motor 14, in such a manner that the power unit 12 is located away from the clamping devices 10 and is connected to the same by means of the elongated and flexible mechanical transmission members 16.

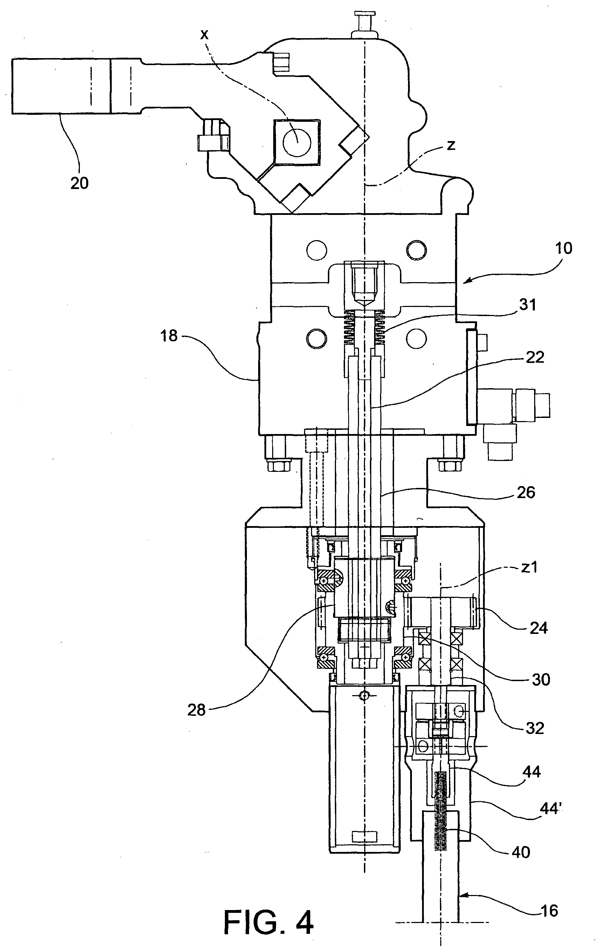

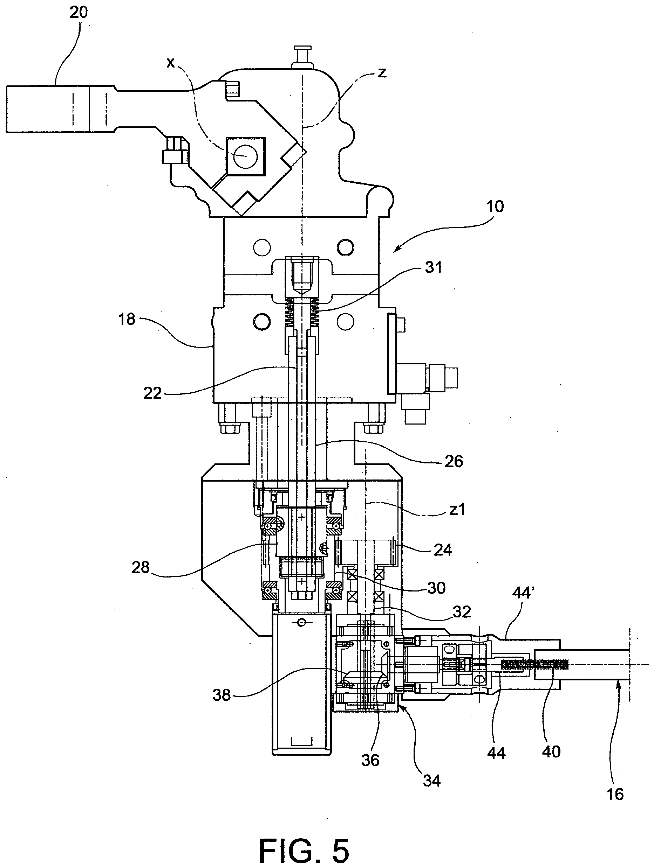

With reference now in particular to Figures 4 and 5, each clamping device 10 basically comprises:
- a body 18,
- a clamping member 20, that is for example made in the form of a tilting arm supported by the body 18 so as to be able to tilt about an axis of oscillation x (that in the example proposed here is oriented horizontally),
- a rod-like control member 22 that is able to translate in a direction of translation z coinciding with its own longitudinal axis (which, in the example proposed here, is oriented vertically) and that is able to cooperate with the clamping member 20 to cause it to tilt about the axis of oscillation x between a first position, or closed position, and a second position, or open position,
- an input gearwheel 24 rotatable about an axis of rotation z1, which in the example proposed here is arranged parallel to the direction of translation z, and
- a motion conversion mechanism for converting the rotary motion of the input gearwheel 24 about the axis of rotation z1 into a translational motion of the control member 22 in the direction of translation z.

In the example shown in Figures 4 and 5, the motion conversion mechanism is a screw and nut mechanism and includes a screw 26 and a nut 28. The screw 26 is arranged with its own longitudinal axis coinciding with the direction of translation z and is operatively associated with the control member 22 to cause it to translate in the direction of translation z. Preferably, the screw 26 has a longitudinal cavity into which is inserted the control member 22. Preferably, elastic members 31, such as Belleville washers, are inserted between the control member 22 and the screw 26 to enable relative movements between the control member 22 and the screw 26 in the direction of translation z, thereby taking up any differences in travel among the clamping devices 10. The nut 28 engages on one side with the screw 26 and on the other is drivingly connected for rotation with a gearwheel 30 meshing with the input gearwheel 24, whereby the nut 28 is caused to rotate by the input gearwheel 24 about the direction z. The input gearwheel 24 is mounted on a drive shaft 32 so as to be drivingly connected for rotation therewith, said shaft being torsionally coupled to a first end of the elongated and flexible transmission member 16 associated to the respective clamping device 10. The rotary motion (and therefore the torque) transmitted by the electric motor 14 to the drive shaft 32, and therefore to the input gearwheel 24, of each clamping device 10 via a respective elongated and flexible mechanical transmission member 16 is therefore converted into a translational motion of the control member 22 (and therefore into a longitudinal force applied to said member) and therefore into a closing/opening movement of the clamping member 20.

According to the embodiment shown in Figure 4, the first end of the elongated and flexible mechanical transmission member 16 is arranged such that the longitudinal axis of the same is parallel to, and more specifically coinciding with, the axis of rotation z1 of the drive shaft 32 and of the input gearwheel 24.

According to the embodiment shown in Figure 5, the first end of the elongated and flexible mechanical transmission member 16 is arranged such that the longitudinal axis thereof is oriented perpendicular to the axis of rotation z1 of the drive shaft 32 and of the input gearwheel 24. In this case, an angular gear mechanism 34 is provided, which may for example comprise a pair of bevel gears 36 and 38 meshing with one another, one of which (bevel gear 36) is arranged coaxially with the first end of the elongated and flexible mechanical transmission member 16, while the other (bevel gear 38) is arranged coaxially with the drive shaft 32 and with the input gearwheel 24. The longitudinal axis of the first end of the elongated and flexible mechanical transmission member 16 may however also be oriented so as to form a different angle with the axis of rotation z1.

In general terms, therefore, each clamping device of the clamping fixture includes a rotary input member (in this case, the input gearwheel 24) adapted to be torsionally coupled to a first end of an elongated and flexible mechanical transmission member to be caused to rotate by the same, a translating output member (in this case, the rod-like control member 22) and motion converting means for converting the rotary motion of the input member into a translational motion of the control member.

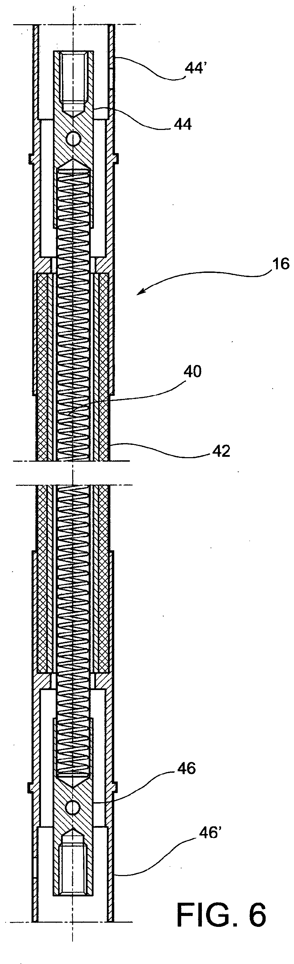

With reference now to Figure 6, the elongated and flexible mechanical transmission member 16 preferably includes a flexible cable 40, formed for example by one or more steel strands, and a sheath 42 in which the flexible cable 40 is received so as to be free to rotate. The flexible cable 40 is provided at its opposite ends with a first connection terminal 44 and a second connection terminal 46, which in an embodiment are made as threaded connection terminals, in particular as female connection terminals adapted to engage respective male connection terminals by means of a threaded connection. The first connection terminal 44 is associated with the first end (actuator-side end) of the elongated and flexible mechanical transmission member 16, while the second connection terminal 46 is associated with the second end (motor-side end) of the elongated and flexible mechanical transmission member 16. The sheath 42 is also provided at its opposite ends with a first connection terminal 44' and a second connection terminal 46', respectively associated with the first end (actuator-side end) and the second end (motor-side end) of the elongated and flexible mechanical transmission member 16. In order for the flexible cable 40 to be able to rotate, the connection terminals 44' and 46' of the sheath 42 must both be prevented from rotating so that they cannot rotate about their respective longitudinal axes.

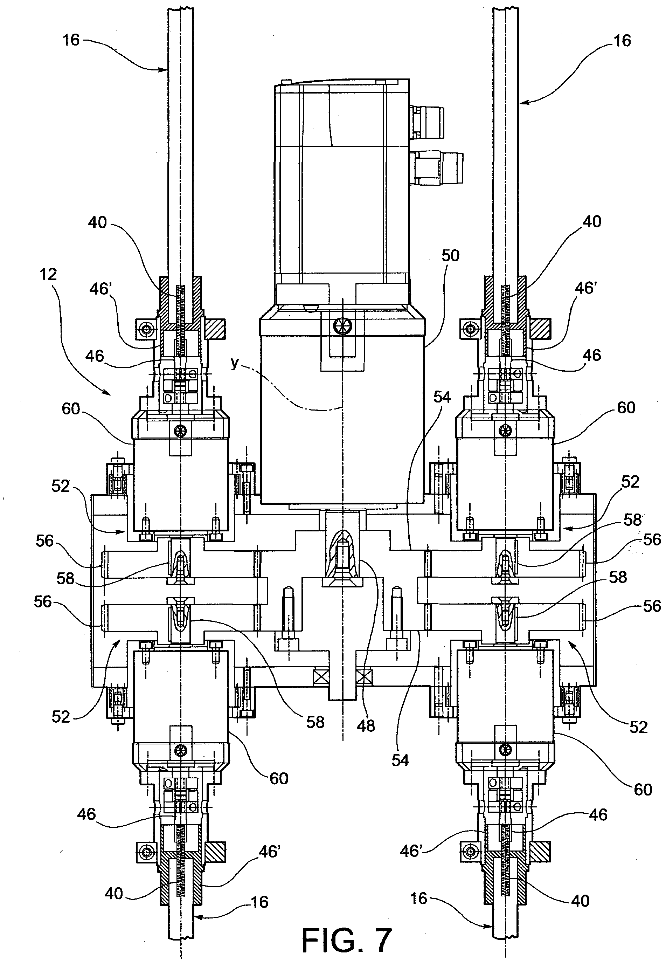

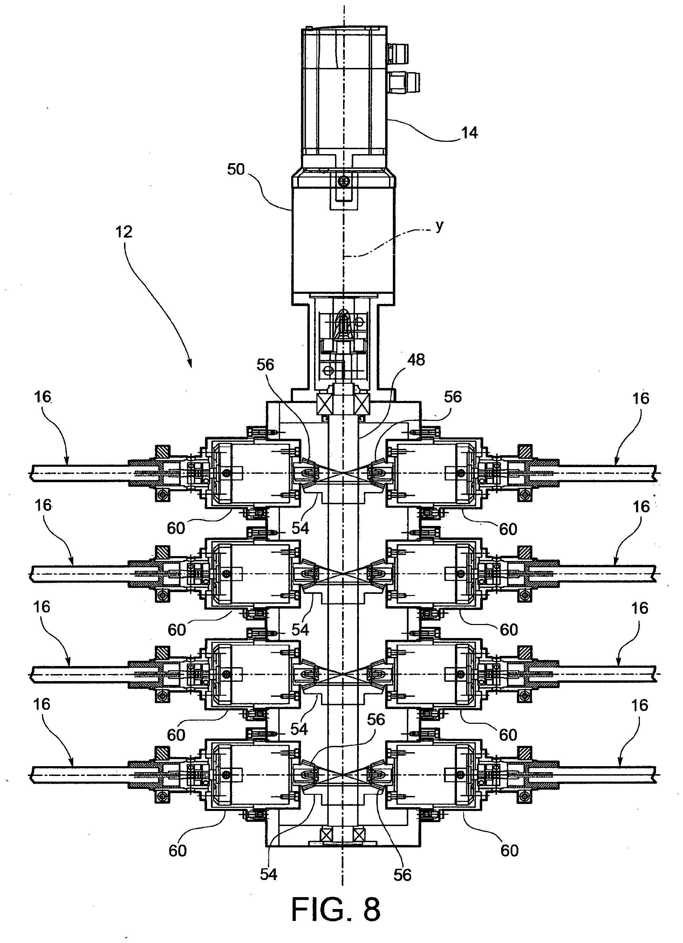

Finally, Figures 7 and 8 show two possible examples of the power unit 12 in the case of connection of an electric motor 14 to a plurality of clamping devices 10 by means of a corresponding plurality of elongated and flexible mechanical transmission members 16.

With reference to Figure 7, the power unit 12 includes, in addition to the electric motor 14, a drive shaft 48 (as rotary actuation member) that can be driven to rotate by the electric motor 14, if necessary by means of a reduction gear 50, about an axis of rotation y, as well as a plurality of transmission mechanisms 52, namely as many as the clamping devices 10 that are controlled by the electric motor 14 (in this specific case, four transmission mechanisms), that are each able to transmit the rotary motion (and therefore the torque) from the drive shaft 48 to the second end (second connection terminal 46) of a respective elongated and flexible mechanical transmission member 16. In the example shown in Figure 7, the second ends of the elongated and flexible mechanical transmission members 16 are arranged with the respective longitudinal axes oriented parallel to the axis of rotation y of the drive shaft 48. According to this example, each transmission mechanism 52 includes a driving gearwheel 54, which is made as a gearwheel with cylindrical teeth and is mounted on the drive shaft 48 so as to be drivingly connected for rotation therewith, and a driven gearwheel 56, which is also made as a gearwheel with cylindrical teeth and permanently meshes with the driving gearwheel 54. Each driven gearwheel 56 is mounted on a driven shaft 58 so as to be drivingly connected for rotation therewith, said shaft being arranged coaxially with the second end of a respective elongated and flexible mechanical transmission member 16 and being adapted to be torsionally coupled to said end, if necessary by means of a reduction gear 60. As provided for in the example shown in Figure 7, in order to limit the overall size of the system, each driving gearwheel 54 (in this case, two driving gearwheels are provided) can mesh with several driven gearwheels 56.

In the example shown in Figure 8, in which parts and elements that are identical or corresponding to those of Figure 7 have been identified with the same reference signs, the second ends of the elongated and flexible mechanical transmission members 16 are arranged with the respective longitudinal axes orientated perpendicular, instead of parallel, to the axis of rotation y of the drive shaft 48. In this case, therefore, the rotary motion (and therefore the torque) is transmitted from the drive shaft 48 to the second end of each elongated and flexible mechanical transmission member 16, for example using bevel gears. The drive and driven gearwheels 54, 56 of each transmission mechanism 52 are in this case made as bevel gears, instead of gears with cylindrical teeth. The description relating to Figure 7 applies to all other aspects, including the fact that each driving gearwheel 54 (in this case, four driving gearwheels are provided) can mesh with several driven gearwheels 56.

Both in the example of Figure 7 and in that of Figure 8, the reduction gears 60 may all have the same transmission ratio, in which case a given angle of rotation of the drive shaft 48 will cause the same travel of the control members 22 of all of the clamping devices 10, or may have different transmission ratios, in which case the travels of the control members 22 of the clamping devices 10 resulting from a given angle of rotation of the drive shaft 48 will be correspondingly different from each other.

According to some embodiments of the invention, the clamping fixture may comprise a number of groups of clamping devices, each group being controlled by a respective electric motor. In this case, therefore, the power unit will include a corresponding number of electric motors and, for each electric motor, a number of transmission mechanisms equal to the number of clamping devices to be controlled by means of this electric motor. The configuration of the clamping fixture according to the invention can therefore be easily adapted for specific applications.

Naturally, the principle of the invention remaining unchanged, the embodiments and the constructional details may be greatly modified with respect to those described and illustrated purely by way of a non-limiting example, without thereby departing from the scope of protection as defined in the appended claims.

## Claims

1. Electromechanically-operated clamping fixture for clamping mechanical parts, in particular sheet-metal vehicle parts, comprising a plurality of clamping devices (10) and a electromechanical actuation system arranged to control the clamping devices (10),
wherein each clamping device (10) comprises a clamping member (20) which is movable between a first position, or closed position, and a second position, or open position, and a translating control member (22) which is operatively connected to the clamping member (20) to cause the latter to move between said first and second position,
**characterized in that** the electromechanical actuation system comprises:
an electric motor (14),
a rotary actuation member (48) adapted to be driven to rotate by the electric motor (14), and
for each clamping device (10), a rotary input member (24), a motion conversion mechanism (26, 28) for converting the rotary motion of the input member (24) into a translational motion of the control member (22) of the clamping device (10), and an elongated and flexible mechanical transmission member (16) adapted to transmit torque from the rotary actuation member (48) to the rotary input member (24) of the clamping device (10), said elongated and flexible mechanical transmission member (16) having a first end (44) torsionally coupled, directly or indirectly, to the rotary input member (24) of the respective clamping device (10), and a second end (46) torsionally coupled, directly or indirectly, to the rotary actuation member (48).

2. Electromechanically-operated clamping fixture according to claim 1, wherein the motion conversion mechanism (26, 28) is a nut and screw mechanism, with a screw (26) that is arranged to drive the translational movement of the control member (22) and with a nut (28) that is arranged to be driven to rotate by the input member (24).

3. Electromechanically-operated clamping fixture according to claim 1 or claim 2, wherein the clamping member (20) of each clamping device (10) is mounted so as to be tiltable about an axis of oscillation (x).

4. Electromechanically-operated clamping fixture according to any of the preceding claims, wherein each elongated and flexible mechanical transmission member (16) comprises a flexible cable (40) and a sheath (42) in which the flexible cable (40) is received so as to be able to rotate about its longitudinal axis.

5. Electromechanically-operated clamping fixture according to any of the preceding claims, wherein the electromechanical actuation system further comprises, for each clamping device (10), a motion transmission mechanism (52) arranged to transmit the motion from the rotary actuation member (48) to the second end (46) of the elongated and flexible mechanical transmission member (16) associated with said clamping device (10).

6. Electromechanically-operated clamping fixture according to any of the preceding claims, wherein the first end (46) of each elongated and flexible mechanical transmission member (16) is arranged with its longitudinal axis parallel or perpendicular to an axis of rotation (z1) of the rotary input member (24) of the respective clamping device (10).

7. Electromechanically-operated clamping fixture according to any of the preceding claims, wherein the second end (46) of each elongated and flexible mechanical transmission member (16) is arranged with its longitudinal axis parallel or perpendicular to an axis of rotation (y) of the rotary actuation member (48).

## Patentansprüche

1. Elektromechanisch betätigte Klemmvorrichtung zum Klemmen von mechanischen Teilen, insbesondere Metallblech-Fahrzeugteilen, enthaltend eine Vielzahl von Klemmeinrichtungen (10) und ein elektromechanisches Betätigungssystem, das zum Steuern der Klemmeinrichtungen (10) angeordnet ist,
wobei jede Klemmeinrichtung (10) ein Klemmelement (20) aufweist, das zwischen einer ersten Position, oder geschlossenen Position, und einer zweiten Position, oder offenen Position, beweglich ist und ein Steuerelement (22) versetzt, das betriebsbereit mit dem Klemmelement (20) verbunden ist, so dass das Letztere veranlasst wird, sich zwischen der ersten und der zweiten Position zu bewegen,
**dadurch gekennzeichnet, dass** das elektromechanische Betätigungssystem aufweist:
einen elektrischen Motor (14),
ein Drehbetätigungselement (48), das angepasst ist, dass es zum Drehen von dem elektrischen Motor (14) angetrieben wird, und
für jede Klemmeinrichtung (10) ein Dreheingangselement (24), einen Bewegungsumwandlungsmechanismus (26, 28) zum Umwandeln der Drehbewegung des Eingangselements (24) in eine translatorische Bewegung des Steuerelements (22) der Klemmeinrichtung (10), und ein langgestrecktes und flexibles mechanisches Übertragungselement (16), das zum Übertragen eines Drehmoments von dem Drehbetätigungselement (48) auf das Dreheingangselement (24) der Klemmeinrichtung (10) angepasst ist, wobei das langgestreckte und flexible mechanische Übertragungselement (16) ein erstes Ende (44) aufweist, das drehmäßig direkt oder indirekt mit dem Dreheingangselement (24) der entsprechenden Klemmeinrichtung (10) gekoppelt ist, und ein zweites Ende (46) aufweist, dass drehmäßig direkt oder indirekt mit dem Drehbetätigungselement (48) gekoppelt ist.

2. Elektromechanisch betätigte Klemmvorrichtung nach Anspruch 1, wobei der Bewegungsumwandlungsmechanismus (26, 28) ein Mutter-und-Schraube-Mechanismus ist mit einer Schraube (26), die zum Antreiben der translatorischen Bewegung des Steuerelements (22) angeordnet ist, und mit einer Mutter (28), die derart angeordnet ist, dass sie zum Drehen von dem Eingangselement (24) angetrieben wird.

3. Elektromechanisch betätigte Klemmvorrichtung nach Anspruch 1 oder 2, wobei das Klemmelement (20) jeder Klemmeinrichtung (10) derart montiert ist, dass es um eine Oszillationsachse (x) kippbar ist.

4. Elektromechanisch betätigte Klemmvorrichtung nach einem der vorangehenden Ansprüche, wobei jedes langgestreckte und flexible mechanische Übertragungselement (16) ein flexibles Kabel (40) und eine Hülle (42) aufweist, in der das flexible Kabel (40) aufgenommen ist, so dass es sich um seine Längsachse drehen kann.

5. Elektromechanisch betätigte Klemmvorrichtung nach einem der vorangehenden Ansprüche, wobei das elektromechanische Betätigungssystem ferner für jede Klemmeinrichtung (10) einen Bewegungsübertragungsmechanismus (52) aufweist, der zum Übertragen der Bewegung von dem Drehbetätigungselement (48) auf das zweite Ende (46) des langgestreckten und flexiblen mechanischen Übertragungselements (16), das der Klemmeinrichtung (10) zugeordnet ist, angeordnet ist.

6. Elektromechanisch betätigte Klemmvorrichtung nach einem der vorangehenden Ansprüche, wobei das erste Ende (46) jedes langgestreckten und flexiblen mechanischen Übertragungselements (16) mit seiner Längsachse parallel oder senkrecht zu einer Drehachse (z1) des Dreheingangselements (24) der entsprechenden Klemmeinrichtung (10) angeordnet ist.

7. Elektromechanisch betätigte Klemmvorrichtung nach einem der vorangehenden Ansprüche, wobei das zweite Ende (46) jedes langgestreckten und flexiblen mechanischen Übertragungselements (16) mit seiner Längsachse parallel oder senkrecht zu einer Drehachse (y) des Drehbetätigungselements (48) angeordnet ist.

## Revendications

1. Dispositif de serrage à commande électromécanique pour le serrage de pièces mécaniques, en particulier des pièces de véhicule en tôle métallique, comprenant une pluralité de dispositifs de serrage (10) et un système d'actionnement électromécanique agencé pour commander les dispositifs de serrage (10),
dans laquelle chaque dispositif de serrage (10) comprend un élément de serrage (20) qui est mobile entre une première position, ou position fermée, et une seconde position, ou position ouverte, et un élément de commande de translation (22) qui est relié fonctionnellement à l'élément de serrage (20) pour amener ce dernier à se déplacer entre lesdites première et seconde positions,
**caractérisée en ce que** le système d'actionnement électromécanique comprend :
un moteur électrique (14),
un élément d'actionnement rotatif (48) adapté pour être entraîné pour tourner par le moteur électrique (14), et
pour chaque dispositif de serrage (10), un élément d'entrée rotatif (24), un mécanisme de conversion de mouvement (26, 28) permettant de convertir le mouvement rotatif de l'élément d'entrée (24) en un mouvement de translation de l'élément de commande (22) du dispositif de serrage (10), et un élément de transmission mécanique allongé et souple (16) adapté pour transmettre un couple depuis l'élément d'actionnement rotatif (48) jusqu'à l'élément d'entrée rotatif (24) du dispositif de serrage (10), ledit élément de transmission mécanique allongé et souple (16) ayant une première extrémité (44) couplée en torsion, directement ou indirectement, à l'élément d'entrée rotatif (24) du dispositif de serrage (10) respectif, et une seconde extrémité (46) couplée en torsion, directement ou indirectement, à l'élément d'actionnement rotatif (48).

2. Dispositif de serrage à commande électromécanique selon la revendication 1, dans laquelle le mécanisme de conversion de mouvement (26, 28) est un mécanisme écrou et vis, avec une vis (26) qui est agencée pour entraîner le mouvement de translation de l'élément de commande (22) et avec un écrou (28) qui est agencé pour être entraîné pour tourner par l'élément d'entrée (24).

3. Dispositif de serrage à commande électromécanique selon la revendication 1 ou la revendication 2, dans laquelle l'élément de serrage (20) de chaque dispositif de serrage (10) est monté de manière à être inclinable sur un axe d'oscillation (x).

4. Dispositif de serrage à commande électromécanique selon l'une quelconque des revendications précédentes, dans laquelle chaque élément de transmission mécanique allongé et souple (16) comprend un câble souple (40) et une gaine (42) dans laquelle le câble souple (40) est reçu de manière à être capable de tourner sur son axe longitudinal.

5. Dispositif de serrage à commande électromécanique selon l'une quelconque des revendications précédentes, dans laquelle le système d'actionnement électromécanique comprend en outre, pour chaque dispositif de serrage (10), un mécanisme de transmission de mouvement (52) agencé pour transmettre le mouvement depuis l'élément d'actionnement rotatif (48) jusqu'à la seconde extrémité (46) de l'élément de transmission mécanique allongé et souple (16) associé audit dispositif de serrage (10).

6. Dispositif de serrage à commande électromécanique selon l'une quelconque des revendications précédentes, dans laquelle la première extrémité (46) de chaque élément de transmission mécanique allongé et souple (16) est agencée avec son axe longitudinal parallèle ou perpendiculaire à un axe de rotation (z1) de l'élément d'entrée rotatif (24) du dispositif de serrage (10) respectif.

7. Dispositif de serrage à commande électromécanique selon l'une quelconque des revendications précédentes, dans laquelle la seconde extrémité (46) de chaque élément de transmission mécanique allongé et souple (16) est agencée avec son axe longitudinal parallèle ou perpendiculaire à un axe de rotation (y) de l'élément d'actionnement rotatif (48).
